(19) 

Europäisches
Patentamt
European
Patent Office
Office européen
des brevets

(11) **EP 2 059 053 A2**

(12) **EUROPEAN PATENT APPLICATION**

(43) Date of publication:
**13.05.2009 Bulletin 2009/20**

(51) Int Cl.:
***H04N 7/26*** (2006.01)   ***H04N 7/50*** (2006.01)

(21) Application number: **08105614.5**

(22) Date of filing: **20.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **19.10.2007   KR 20070105592**

(71) Applicant: **Gwangju Institute of Science and Technology**
**Buk-gu, Gwangju 500-712 (KR)**

(72) Inventors:
• **Ho, Yo Sung**
  **Gwangju 500-712 (KR)**
• **Na, Sang Tae**
  **Gwangju 500-712 (KR)**
• **Oh, Kwan Jung**
  **Gwangju 500-712 (KR)**
• **Lee, Cheon**
  **Gwangju 500-712 (KR)**

(74) Representative: **Capasso, Olga et al**
**De Simone & Partners S.p.A.**
**Via Vincenzo Bellini, 20**
**00198 Roma (IT)**

(54)   **Method and device for generating depth image using reference image, method for encoding/ decoding depth image, and encoder or decoder for the same**

(57)   The present invention relates to a method and device for generating a depth image, a method for encoding/decoding the depth image, and an encoder/decoder for the same, which are related to a depth image encoding method that can effectively reduce a bit generation rate using a reference image obtained by at least one camera and improve encoding efficiency. A depth image generating method according to an embodiment of the invention includes a step (a) of obtaining a depth image at a viewpoint and setting the obtained depth image to a reference image; a step (b) of applying a 3D warping method to the reference image and predicting and generating a depth image at a specific viewpoint; and a step (c) of removing a hole that exists in the predicted and generated depth image.

[FIG. 1]

```
          START
            │
            ▼
  PHOTOGRAPH REFERENCE IMAGE AT          S100
  ANY VIEWPOINT USING DEPTH CAMERA
            │
            ▼
  DOWN-SAMPLE REFERENCE IMAGE            S105
            │
            ▼
  PREDICT AND GENERATE DEPTH IMAGE IN
  SPECIFIC VIEWING DIRECTION FORM        S110
  REFERENCE IMAGE USING 3D WARPING
  METHOD
            │
            ▼
  REMOVE HOLE THAT EXISTS IN PREDICTED   S115
  AND GENERATED DEPTH IMAGE
            │
            ▼
  GENERATE DEPTH IMAGE IN SPECIFIC       S120
  VIEWING DIRECTION
            │
            ▼
          END
```

EP 2 059 053 A2

**Description**

BACKGROUND OF THE INVENTION

1. Technical Field

The present invention relates to a method and device for generating a depth image using a reference image, a method for encoding/decoding the depth image, and an encoder/decoder for the same. More particularly, the present invention relates to a method and device for generating a depth image, a method for encoding/decoding the depth image, an encoder/decoder for the same, and a recording medium recording an image generated by the method, which are related to a depth image encoding method that can effectively reduce a bit generation rate using a reference image obtained by at least one camera and improve encoding efficiency.

2. Related Art

A three-dimensional video processing technology as a core technology of the next-generation information communication service field is a state-of-the-art technology for which technology development competition is keen with the development to an information industry society. The three-dimensional video processing technology is an essential element to provide a high-quality image service in a multimedia application. Currently, the application field of the three-dimensional video processing technology is diversified into various application fields such as broadcasting, medical care, education (or discipline), military affairs, games, animation, or virtual reality as well as the field of information and communication. The three-dimensional video processing technology is considered as the next-generation of realistic three-dimensional multimedia information communication core technology, which is commonly required in a variety of fields, and has been studied by advanced countries.

In general, the three-dimensional video may be defined from two standpoints as follows. First, the three-dimensional video may be defined as video that is configured such that depth information is applied to an image and a user feels that a portion of the image protrudes from a screen. Second, the three-dimensional video may be defined as video that is configured such that various viewpoints are provided and a user feels reality (that is, three-dimensional impression) from an image. This three-dimensional video may be classified into stereoscopic type, a multi-view type, an integral photography (IP) type, a multi-view (omni) type, a panorama type, and a hologram type in accordance with an acquisition method, depth impression, and a display method. In addition, examples of a method that represents three-dimensional video include an image-based reconstruction method and a mesh-based representation method.

In recent years, depth image-based rendering (DIBR) has attracted attention as the method that represents the three-dimensional video. The depth image-based rendering generates scenes at different viewpoints using reference images that have information such as a depth or a different angle for each pixel. According to the depth image-based rendering, a three-dimensional model having a complicated shape, which is not easy to represent, can be easily rendered, a signal processing method such as general image filtering can be applied, and high-quality three-dimensional video can be generated. For this purpose, the depth image-based rendering uses a depth image (or depth map) and a texture image (or color image) that are acquired through a depth camera and a multi-view camera. In particular, the depth image is used to represent a three-dimensional model to be realistic (that is, to generate three-dimensional video).

The depth image may be defined as an image that represents a distance between an object on a three-dimensional space and a camera used to photograph the object in a black-and-white unit. The depth image is widely used in a three-dimensional restoration technology or a three-dimensional warping technology based on depth information and camera parameters. The depth image is applied in a variety of fields, and a representative example thereof is a free viewpoint TV. The free viewpoint TV is a TV where a user does not view an image at only a predetermined viewpoint but views an image at any viewpoint according to the selection from the user. Since the free viewpoint TV has the above-described characteristics, images can be generated at any viewpoint in consideration of multi-view images photographed by a plurality of cameras and multi-view depth images corresponding to the multi-view images.

However, the depth image may include depth information at a single viewpoint. In general, the depth image needs to include depth information at multi-viewpoints to achieve the above-described characteristics. Even if the multi-view depth image is configured more constantly than the texture image, the multi-view depth image has a large amount of data according to encoding. Accordingly, an effective video compression technology is essentially required in the depth image.

In the related art, in consideration of the above characteristics, research on encoding of a depth image based on a single viewpoint has been studied. For example, there is a method in which a correlation between a texture image and a depth image, particularly, a correlation between motion vectors is used. This method reduces the number of bits when a depth image is encoded using a motion vector of the texture image that is encoded earlier than the depth image, under a condition where the motion vectors of the texture image and the depth image are similar to each other. However, this method has the following two disadvantages. One is that the texture image needs to be encoded earlier than the depth image. The other is that the image quality of the depth image depends on the image quality of the texture image.

Meanwhile, in recent years, an encoding method of a multi-view depth image has been studied by the MPEG Standardization Organization. For example, there is a method that uses texture images that are obtained by photographing one scene using a plurality of cameras in consideration of a relationship between adjacent images. This method can improve encoding efficiency, because there remains a large amount of information obtained from the texture images. If the correlation between the temporal direction and the spatial direction is considered, it is possible to further improve encoding efficiency. However, there is a problem in that this method is inefficient in terms of time or costs.

Meanwhile, among the results of work studied for a multi-view depth image encoding method, there is a document "Efficient Compression of Multi-view Depth Data based on MVC" that is represented by Phillip Merkle, Aljoscha Smolic, Karsten Muller, and Thomas Wiegand at the IEEE 3DTV Conference, Kos, Greece on May, 2007. According to this document, when a multi-view depth image is encoded, an image at each viewpoint is not individually encoded but encoded in consideration of a relationship between viewing directions. According to this document, an encoding order of the multi-view image encoding method is used in the multi-view depth image encoding method. However, the multi-view depth image encoding method that is suggested in the document follows the existing multi-view image encoding method, because multi-view depth image encoding method considers a relationship between the view-point directions having characteristics similar to those of the adjacent multi-view images instead of the multi-view images.

SUMMARY OF THE INVENTION

Accordingly, the invention has been made to solve the above-described problems, and it is an object of the invention to provide a method and device for generating a depth image using a reference image, a method for encoding/decoding the depth image, an encoder/decoder for the same, and a recording medium recording an image generated by the method, which can use a down-sampling method that reduces a size of a depth image having a simpler pixel value than a texture image.

It is another object of the invention to provide a method and device for generating a depth image using a reference image, a method for encoding/decoding the depth image, an encoder/decoder for the same, and a recording medium recording an image generated by the method, which can use a method that predicts a depth image in a specific viewing direction from a reference image using a 3D warping technology.

It is still another object of the invention to provide a method and device for generating a depth image using a reference image, a method for encoding/decoding the depth image, an encoder/decoder for the same, and a recording medium recording an image generated by the method, which can use a method that fills a hole generated in a predicted depth image using a reference image and pixel values around the hole.

According to a first embodiment of the invention, a depth image generating method includes: a step (a) of obtaining a depth image at a viewpoint and setting the obtained depth image to a reference image; a step (b) of applying a 3D warping method to the reference image and predicting and generating a depth image at a specific viewpoint; and a step (c) of removing a hole that exists in the predicted and generated depth image.

In the step (a), the reference image may be down-sampled.

The step (b) may include: a step (b1) of projecting positions of pixel values existing in the reference image onto a three-dimensional space; a step (b2) of reprojecting the projected position values on the three-dimensional space at predetermined positions of a target image; and a step (b3) of transmitting the pixel values of the reference image to pixel positions of the target image corresponding to pixel positions of the reference image.

In the step (c), when one reference image exists, an intermediate value of available pixel values among the pixel values around the hole may be applied to the hole so as to remove the hole. In the step (c), when a plurality of reference images exist, a pixel value of a corresponding portion of another reference image may be applied to a hole of a depth image that is predicted and generated from a specific reference image so as to remove the hole.

According to a second embodiment of the invention, a depth image generating device includes a depth image storage unit that obtains a depth image at a viewpoint and stores the obtained depth image as a reference image; a depth image prediction unit that applies a 3D warping method to the reference image and predicts and generates a depth image at a specific viewpoint; and a hole removing unit that removes a hole that exists in the depth image predicted and generated by the depth image prediction unit.

The depth image generating device according to the second embodiment of the invention may further include: a down-sampling unit that down-samples the reference image stored in the depth image storage unit.

The depth image prediction unit may project positions of pixel values existing in the reference image onto a three-dimensional space, reproject the projected position values on the three-dimensional space at predetermined positions of a target image, and transmit the pixel values of the reference image to pixel positions of the target image corresponding to pixel positions of the reference image, such that the depth image at the specific viewpoint is predicted and generated.

When one reference image exists, the hole removing unit may apply an intermediate value of available pixel values among pixel values around the hole to the hole so as to remove the hole. When a plurality of reference images exist, the hole removing unit may apply a pixel value of a corresponding portion of another reference image to a hole of a depth image that is predicted and generated from a specific reference image so as to remove the hole.

According to a third embodiment of the invention, there is provided an encoding method using a depth image at a specific viewpoint. The depth image is generated using the following steps: a step (a) of obtaining a depth image at a viewpoint and setting the obtained depth image to a reference image; a step (b) of applying a 3D warping method to the reference image and predicting and generating the depth image at a specific viewpoint; and a step (c) of removing a hole that exists in the predicted and generated depth image.

According to a fourth embodiment of the invention, an encoder includes: an image prediction unit that performs inter-prediction and intra-prediction; an image T/Q unit that transforms and quantizes a prediction sample that is obtained by the image prediction unit; an entropy coding unit that encodes image data quantized by the image T/Q unit; and a depth image generating unit that generates a depth image at a specific viewpoint by the image prediction unit. In this case, the depth image generating unit includes: a depth image prediction unit that applies a 3D warping method to a reference image using a depth image at a viewpoint as the reference image and predicts and generates a depth image at a specific viewpoint; and a hole removing unit that removes a hole that exists in the depth image predicted and generated by the depth image prediction unit.

According to a fifth embodiment of the invention, there are provided a decoding method and a decoder that decode the image encoded by the encoding method and the encoder.

According to the invention, in accordance with the above-described objects and the embodiments, the invention can achieve the following effects. First, it is possible to efficiently reduce a bit generation ratio that is generated when a depth image is encoded. Second, encoding efficiency of a depth image can be improved. Third, the foreground can be prevented from being blocked by the background. Fourth, different from the related art in which a texture image is used at the time of encoding a depth image, it is possible to improve encoding efficiency using only characteristics of the depth image. Fifth, a depth image at a specific viewpoint can be generated without needing additional information other than camera parameters.

BRIEF DESCRIPTION OF THE DRAWINGS

FIG. 1 is a flowchart illustrating a depth image generating method according to the preferred embodiment of the invention;

FIG. 2 is a conceptual diagram illustrating a depth image synthesis predicting method using a 3D warping method according to the preferred embodiment of the invention;

FIGS. 3 to 5 are conceptual diagrams illustrating a method of removing holes in a depth image according to the preferred embodiment of the invention;

FIG. 6 is a conceptual diagram illustrating a process of applying a depth image according to the preferred embodiment of the invention to a multi-view depth image decoding method;

FIG. 7 is a block diagram illustrating an internal structure of an encoder according to the preferred embodiment of the invention;

FIG. 8 is a flowchart sequentially illustrating an encoding method of an encoder according to the preferred embodiment of the invention;

FIG. 9 is a block diagram illustrating an internal structure of a decoder according to the preferred embodiment of the invention; and

FIG. 10 is a flowchart sequentially illustrating a decoding method of a decoder according to the preferred embodiment of the invention.

DESCRIPTION OF EXEMPLARY EMBODIMENT

The preferred embodiments of the invention will now be described in detail with reference to the accompanying drawings. Like reference numerals designate like elements throughout the specification. However, in describing the present invention, when the specific description of the related known technology or function departs from the scope of the present invention, the detailed description of the corresponding known technology or function will be omitted. Hereinafter, the preferred embodiments of the present invention will be described, but the technical scope of the present invention is not limited thereto, and various modifications and changes can be made by those skilled in the art without departing from the spirit and scope of the present invention.

In this invention, a depth image at a specific viewpoint is generated from at least one reference image. Specifically, this invention sequentially executes a down-sampling step of reducing a size of a reference image as a depth image that has a simpler pixel value than a texture image, a step of predicting a depth image at a specific viewpoint from the reference image using a 3D warping method, and a step of removing, when a hole is generated in the predicted depth image, the hole using the reference image and values of pixels around the hole, thereby generating a depth image that can be viewed at a desired viewpoint. Hereinafter, the preferred embodiments of the invention will be described in detail with reference to the accompanying drawings.

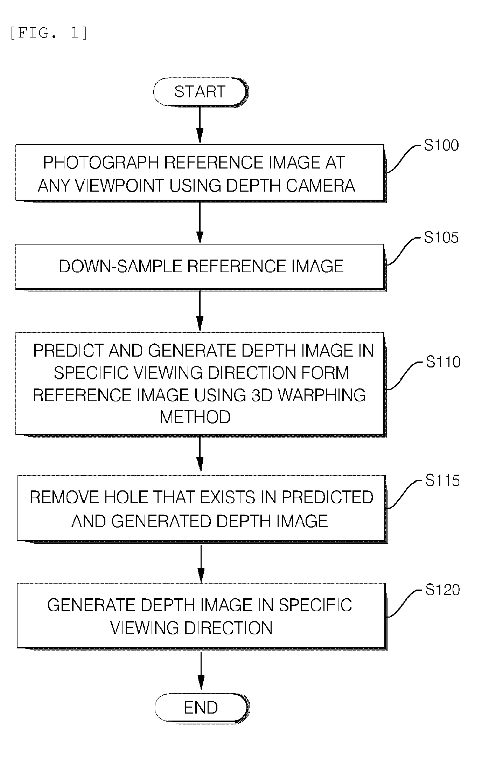

FIG. 1 is a flowchart illustrating a depth image generating method according to the preferred embodiment of the invention. Hereinafter, the depth image generating method using the reference image will be described with reference to FIG. 1.

First, a depth camera is used to photograph a depth image at any viewpoint (S100). The depth image is hereinafter used as a reference image in the preferred embodiments of the invention. In this case, information that is related to a texture image may be obtained using a multi-view camera, and information that is obtained on the basis of a stereo matching method may be applied to the photographed depth image. This stereo matching method enables the depth image to have an accurate depth value. Meanwhile, the stereo matching method is a method in which a three-dimensional image is generated using two-dimensional images that are obtained from spatially different planes. Meanwhile, in the depth image generating method using the reference image, since the reference image can be obtained in advance, Step S100 that has been described above may be omitted.

Then, the reference image is down-sampled (S105). In general, the reference image has a simpler pixel value than a texture image. Accordingly, down-sampling is preferably applied to the reference image in consideration of encoding, transmission, and decoding processes, which will be performed hereinafter. At the time of down-sampling, a sampling ratio is preferably 1/2 or 1/4, because the corresponding sampling ratio is suitable for keeping an optimal depth value. Meanwhile, the reference image that is transmitted after encoding is up-sampled to have an original size, immediately or during a decoding process.

Then, the 3D warping method is used to estimate and generate a depth image in a specific viewing direction from the reference image (S110). Hereinafter, this method is defined as a depth image synthesis predicting method using the 3D warping method. In general, since the depth image has depth image needed to perform 3D warping, it is possible to generate a depth image in a specific viewing direction that corresponds to a target without additional information other than camera parameters. In order to generate the depth image in the specific viewing direction, the following Equations 1 and 2 are used.

[Equation 1]

$$P_{WC} = R \cdot A^{-1} \cdot P_{reference} \cdot D + t$$

[Equation 2]

$$P_{target} = A \cdot R^{-1} \cdot P_{WC} - t$$

In Equations 1 and 2, $P_{wc}$, $P_{reference}$, and $P_{target}$ denote coordinate information, a reference image, and a target image in a three-dimensional space, respectively. In addition, R, A, D, and t denote a rotational variable, a unique variable of a camera, depth information, and a movement variable, respectively.

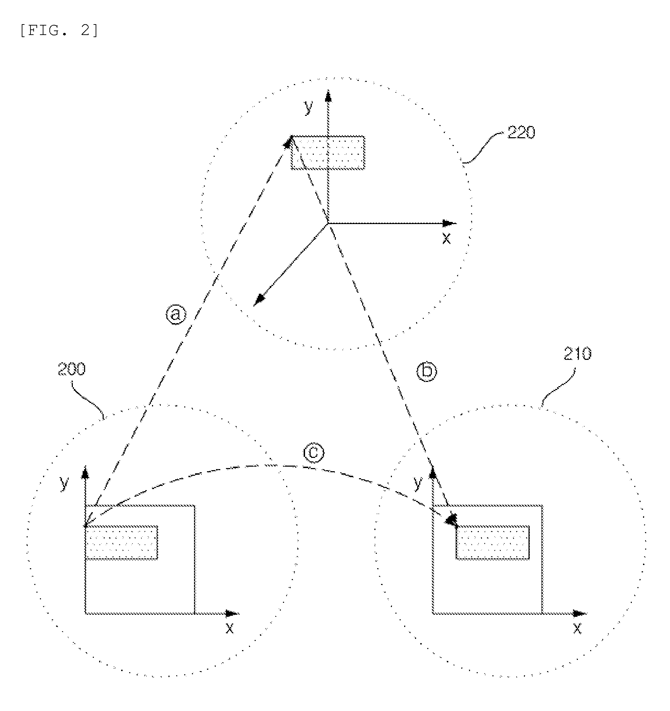

Hereinafter, the depth image synthesis predicting method will be described in detail with reference to FIG. 2. First, positions of the pixel values that exist in a reference image 200 as a two-dimensional image are projected onto a three-dimensional space 220 using Equation 1 ((a) of FIG. 2). Then, using Equation 2, the projected position values on the three-dimensional space 220 are reprojected at predetermined positions of a target image 210 as a two-dimensional image ((b) of FIG. 2). Then, the pixel values of the reference image 200 are transmitted to the pixel positions of the target image 210 that are determined to correspond to the pixel positions of the reference image 200 ((c) of FIG. 2). If the above-described processes of (a), (b), and (c) are sequentially executed, it is possible to generate a depth image in a specific viewing direction according to the embodiment of the invention.

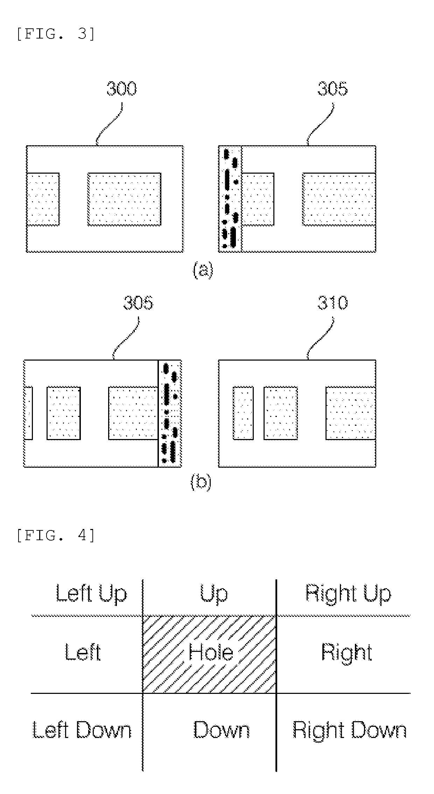

Then, the hole that exists in the predicted and generated depth image is removed (S115). In the depth image that is predicted and generated in Step S110, a hole may be generated due to a closed area. Accordingly, the depth image generating method according to the embodiment of the invention further includes a process of removing a hole, after the processes of (a) to (c). The process of removing a hole will be described below with reference to FIGS. 3 to 5.

(1) Case where one reference image exists

When the depth image that is generated by the processes of (a) to (c) uses a left viewpoint image 300 as the reference image, large and small holes are generated at the left side of a depth image 305, as shown in FIG. 3A. Meanwhile, when the depth image that is generated by the processes of (a) to (c) uses a right viewpoint image 310 as the reference image, large and small holes are generated at the right side of the depth image 305, as shown in FIG. 3B. These holes are generated during a process of virtually setting a portion (that is, closed area) that cannot be represented by the left viewpoint image 300 or the right viewpoint image 310. Accordingly, when the reference image is a single image, it is impossible to calculate values corresponding to the holes.

For this reason, in this invention, an intermediate value of pixel values that are determined as available pixel values among eight pixel values around a hole is adopted, as shown in FIG. 4. When the intermediate value is calculated, a median filter may be used. However, when the hole is generated in an area that forms a boundary between the foreground and the background, if the intermediate value is adopted, the boundary may collapse. At this time, the intermediate value is preferably calculated using only pixel values belonging to a specific area among the pixel values around the hole by determining whether the hole belongs to the foreground or the background on the basis of all round values of the hole.

(2) Case where a plurality of reference images exist

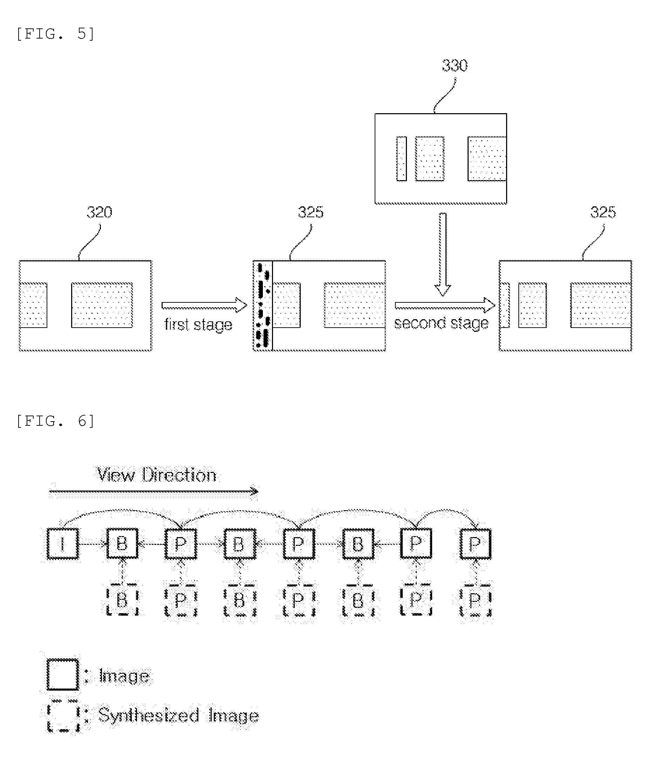

If any viewpoint image is used as the reference image, holes are generated in a portion that is related to any viewpoint image as described in the case of (1). However, for example, when the left viewpoint image 300 is used as the reference image, if the right viewpoint image 310 is used as another reference image, it is very easy to fill pixel values of the holes that are generated at the left side of the depth image 305. The reason is because the pixel values of the holes can be predicted from the right viewpoint image 310. Accordingly, the method of removing holes is performed as shown in FIG. 5.

In a first step, holes are generated at one side of a depth image 325 that is generated using a reference image 320 at the specific viewpoint. Then, in a second step, the holes of the depth image 325 are removed using a reference image 330 at another viewpoint. In this case, when two or more pixel values in the reference image are mapped to a pixel value at one point of the target image at the time of synthesizing images, it is preferable to discriminate between the foreground and the background using the depth values. After the first and second steps are executed, almost all of the holes of the depth image 325 are removed. However, holes may remain, which are not removed in the depth image 325. In this case, it is preferable to use the above-described median filter applying method.

If Step S115 is executed, it is possible to generate the depth image in the specific viewing direction according to the embodiment of the invention (S120). The depth image may be used as an additional reference image when images at a viewpoint P and a viewpoint B are encoded, as shown in FIG. 6. Accordingly, the depth image ultimately improves encoding efficiency.

Hereinafter, an encoder for encoding a generated depth image, an encoding method using the encoder, a decoder for decoding the depth image, and a decoding method using the decoder will be sequentially described with reference to FIGS. 1 to 6. First, the encoder will be described.

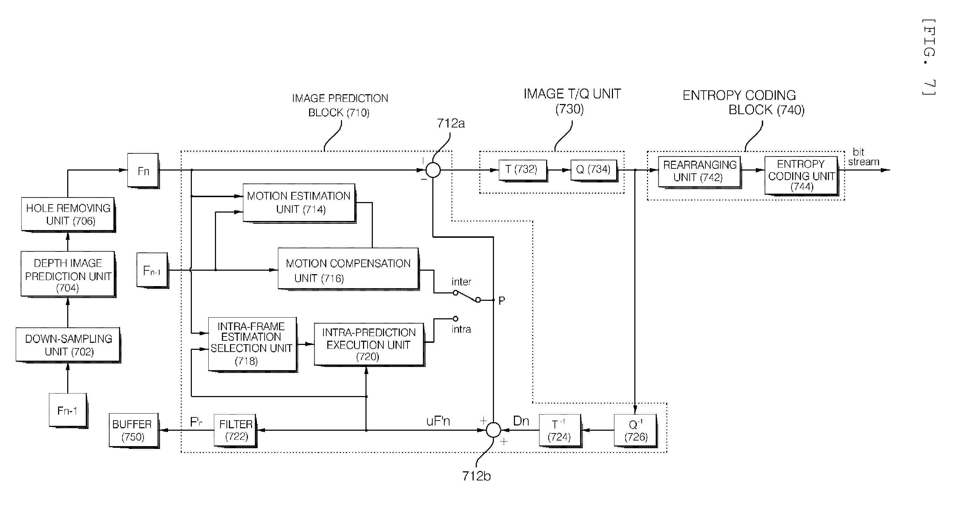

FIG. 7 is a block diagram illustrating an internal structure of an encoder according to the preferred embodiment of the invention. Referring to FIG. 7, an encoder 700 according to the preferred embodiment of the invention includes a down-sampling unit 702, a depth image predicting unit 704, a hole removing unit 706, an image prediction block 710, an image T/Q unit 730, and an entropy coding block 740.

The encoder 700 according to the preferred embodiment of the invention may be implemented by a two-dimensional video encoder in consideration of a simple embodiment structure. However, the invention is not limited thereto, and the encoder 700 may be implemented by a three-dimensional video encoder. In particular, it is preferable that the encoder 700 be implemented by an H.264 encoder in consideration of high data compression efficiency.

The down-sampling unit 702 performs down-sampling on a reference image in the preferred embodiment of the invention.

The depth image predicting unit 704 predicts and generates a depth image in a specific viewing direction using a 3D warping method on the basis of the down-sampled reference image. The detailed description thereof has been given above with reference to Equations 1 and 2 and FIG. 2 and thus is omitted herein.

The hole removing unit 706 removes holes that exist in the predicted and generated depth image in the preferred embodiment of the invention. The detailed description thereof has been given above with reference to FIGS. 3 to 5 and thus is omitted herein. Meanwhile, in the preferred embodiment of the invention, the hole removing unit 706 may convert the depth image into a frame of a form that is supported by an H.264 encoder.

The image prediction block 710 performs inter-prediction and intra-prediction in the preferred embodiment of the invention. In this case, in the inter-prediction, block prediction of a depth image frame $F_n$ is performed using a reference image frame $F_{n-1}$ that is stored in a buffer after decoding and deblocking filtering. In addition, in the intra-prediction, block prediction is performed using pixel data of a block that is adjacent to a block that is desired to predict in the decoded depth image frame $F_n$. Similar to the case of the H.264 encoder according to the related art, in the preferred embodiment of the invention, the image prediction block 710 includes a subtracter 712a, an adder 712b, a motion estimation section 714, a motion compensation unit 716, an intra-frame estimation selection unit 718, an intra-prediction execution unit 720, a filter 722, an inverse transform unit 724, and an inverse quantization unit 726. In this case, the motion estimation section 714 and the motion compensation unit 716 provide blocks having different shapes and sizes, and may be designed to support 1/4 pixel motion estimation, multiple reference frame selection, and multiple bidirectional mode selection. However, the motion estimation section 714 and the motion compensation unit 716 may provide blocks having the same shape and size. Since the image prediction block 710 and individual units 712a to 726 that constitute the image prediction block 710 can be easily embodied by those skilled in the art, the detailed description thereof will be omitted.

In this embodiment, the image T/Q unit 730 transforms and quantizes an estimation sample that is predicted and obtained by the image prediction block 710. To do so, the image T/Q unit 730 includes a transform block 732 and a quantization block 734. In this case, the transform block 732 may be designed to use a separable integer transform (SIT) instead of a discrete cosine transform (DCT) that is mainly used in respects to the video compression standards according to the related art. In this case, a high-speed operation work of the transform block 732 is enabled and distortion can be prevented from occurring due to a mismatch in an inverse transform, which can be easily embodied by those skilled in the art as described above. Therefore, the detailed description thereof will be omitted herein.

In this embodiment, the entropy coding block 740 encodes quantized video data according to a predetermined method to generate a bit stream. To do so, the entropy coding block 740 includes a rearranging unit 742 and an entropy coding unit 744. In this case, the entropy coding unit 744 may be designed to perform efficient compression using an entropy coding scheme, such as universal variable length coding (UVLC), context adaptive variable length coding (CAVLC), and context adaptive binary arithmetic coding (CABAC). Since the entropy coding unit 744 is a component that is included in the H.264 encoder according to the related art, the entropy coding unit 744 may be easily embodied by those skilled in the art, and thus the detailed description thereof will be omitted herein.

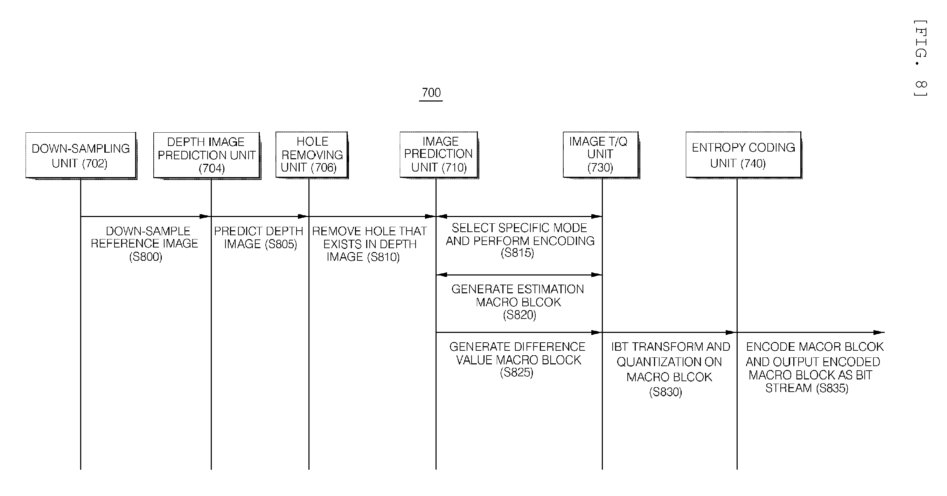

Next, an encoding method of the encoder 700 will be described. FIG. 8 is a flowchart sequentially illustrating an encoding method of an encoder according to the preferred embodiment of the invention. Hereinafter, the description is given with reference to FIG. 8.

First, the down-sampling unit 702 performs down-sampling on the reference image (S800). Then, the depth image predicting unit 704 predicts and generates a depth image in a specific viewing direction using a 3D warping method on the basis of the down-sampled reference image (S805) Then, the hole removing unit 706 removes the holes that exist in the predicted and generated depth image (S810).

If the frame $F_n$ of the depth image that is generated in Steps S800 to S810 is input, the image prediction block 710 and the image T/Q unit 730 encode a transmitted macro block using one of an intra-frame mode and an inter-frame mode (S815). An estimation macro block P is generated even when the inter-frame mode or the intra-frame mode is used (S820). The intra-frame estimation selection unit 718 determines which of the inter-fame mode or the intra-frame mode is used. First, when the intra-frame mode is used, the depth image frame $F_n$ is processed by the transform block 732 and the quantization block 734 of the image T/Q unit 730. Then, the processed frame $F_n$ is reconfigured by the inverse quantization unit 726 and the inverse transform unit 724 of the image prediction block 710. As a result, the macro block P is generated. Meanwhile, when the inter-frame mode is used, the motion estimation section 714 of the image prediction block 710 predicts a motion of the depth image frame $F_n$ on the basis of the depth image frame $F_n$ and at least one reference image frame $F_{n-1}$. As a result, the motion compensation unit 716 compensates for the motion of the depth image frame $F_n$ and generates the macro block P.

If the estimation macro block P is generated, the estimation macro block P and the macro block of the depth image frame $F_n$ are input to the subtracter 712a to obtain a difference value macro block $D_n$ (S825). Then, the difference value macro block is IBT-transformed by the transform block 732, and is quantized in a constant quantization step Qstep in the quantization block 734 (S830).

In the quantized macro block, transform coefficients that are scanned and quantized in a predetermined form (for example, a zigzag form) are sequentially arranged by the rearranging unit 742 of the entropy coding block 740. Then, a series of arranged transform coefficients are encoded by the entropy coding unit 744 and output in a form of a bit stream (S835). Meanwhile, at this time or hereinafter, the entropy coding unit 744 also transmits a sampling ratio.

Meanwhile, a reconfigured frame uF'$_n$ passes through the filter 722 and is then stored in a specific buffer 750 so as to be used when another frame is encoded in the future. The filter 722 is a deblocking filter that is used to suppress distortion from occurring between macro blocks of the reconfigured frame uF'$_n$. The filter 722 is preferably implemented by an adaptive in-loop filter so as to simultaneously achieve subjective quality improvement of video and an increase in compression efficiency.

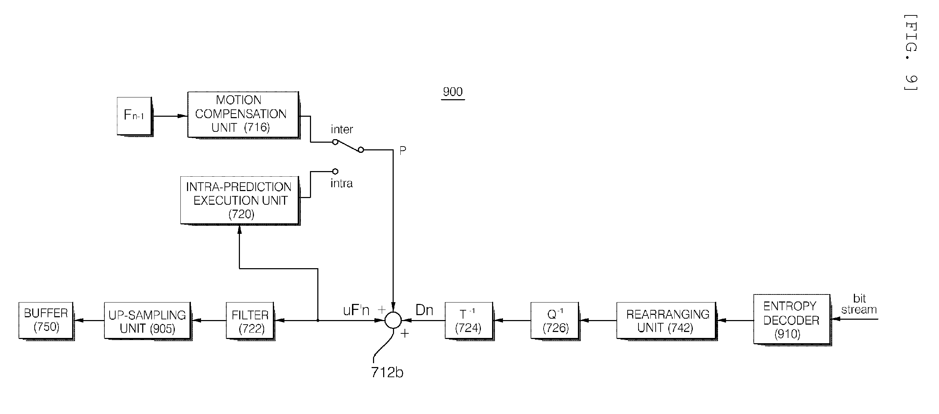

Next, the decoder will be described. FIG. 9 is a block diagram illustrating an internal structure of a decoder according to the preferred embodiment of the invention. Referring to FIG. 9, a decoder 900 according to the preferred embodiment of the invention includes an up-sampling unit 905, an entropy decoding unit 910, a rearranging unit 742, an inverse quantization unit 726, an inverse transform unit 724, an adder 712b, a motion compensation unit 716, an intra-prediction execution unit 720, a filter 722, and a buffer 750.

The decoder 900 according to the preferred embodiment of the invention further includes an up-sampling unit 905 that up-samples a down-sampled image, because the down-sampled image is transmitted.

The up-sampling unit 905 performs up-sampling on an image that passes through the filter 722 in the preferred embodiment of the invention. However, in order to perform the above function, the up-sampling unit 905 needs to know a sampling ratio. The sampling ratio is generally transmitted together with the bit stream or transmitted from the encoder 700 hereinafter. However, the invention is not limited thereto, and the sampling ratio may be determined in advance and stored in each of the encoder 700 and the decoder 900.

In the embodiment of the invention, if the bit stream is input, the entropy decoding unit 910 reconfigures transform coefficients of the macro blocks on the basis of the bit stream.

The functions of the rearranging unit 742, the inverse quantization unit 726, the inverse transform unit 724, the adder 712b, the motion compensation unit 716, the intra-prediction execution unit 720, the filter 722, and the buffer 750 have been described above with reference to FIG. 7, and thus the detailed description thereof will be omitted herein.

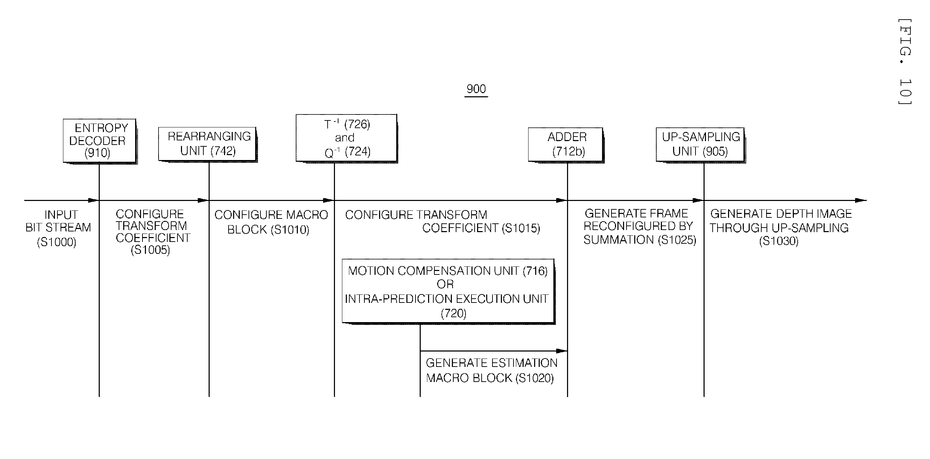

Next, a decoding method of the decoder 900 will be described. FIG. 10 is a flowchart sequentially illustrating a decoding method of a decoder according to the preferred embodiment of the invention. Hereinafter, the decoding method will be described with reference to FIG. 10.

First, if a bit stream is input to the decoder 900 (S1000), the entropy decoding unit 910 reconfigures transform coefficients of macro blocks on the basis of the bit stream (S1005). The reconfigured transform coefficients are configured in a form of macro blocks in the rearranging unit 742 (S1010). The macro block that is configured in Step S1005 is generated as a difference value macro block Dn by the inverse quantization unit 726 and the inverse transform unit 724 (S1015).

Meanwhile, the estimation macro block P is generated by the motion compensation unit 716 in accordance with the inter-frame mode or the intra-prediction execution unit 720 in accordance with the intra-frame mode, in consideration of the reference image frame F$_{n-1}$ (S1020). The generated estimation macro block P and the difference value macro block D$_n$ generated in Step S1015 are summed by the adder 712b. As a result, the reconfigured frame uF'$_n$ is generated (S1025). The reconfigured frame uF'$_n$ is filtered by the deblocking filter 722 and up-sampled by the up-sampling unit 905. As a result, the depth image according to the embodiment of the invention is generated and stored in the buffer 750 (S1030).

Meanwhile, the depth image that is generated by the depth image generating method, the encoder, the encoding method, the decoder, and the decoding method according to the embodiment of the invention is stored in a computer readable recording medium (for example, a CD or a DVD). The three-dimensional video that is generated on the basis of the depth image may be stored the recording medium.

In this invention, it is possible to implement a device that can form the depth image generated with reference to FIGS. 1 to 6. Specifically, the device may include a down-sampling unit that down-samples the reference image, a depth image prediction unit that predicts and generates a depth image in a specific viewing direction using the 3D warping method on the basis of the down-sampled reference image, and a hole removing unit that removes holes in the predicted and generated depth image.

Although the present invention has been described in connection with the exemplary embodiments of the present invention, it will be apparent to those skilled in the art that various modifications and changes may be made thereto without departing from the scope and spirit of the invention. Therefore, it should be understood that the above embodiments are not limitative, but illustrative in all aspects. The scope of the present invention is defined by the appended claims rather than by the description preceding them, and all changes and modifications that fall within metes and bounds of the claims, or equivalents of such metes and bounds are therefore intended to be embraced by the claims.

According to the invention, the generated depth image can be applied to a three-dimensional restoration technology or a three-dimensional warping technology. Encoding of the depth image according to the embodiment of the invention may be used in an image medium (or an image theater), such as a three-dimensional TV or a free viewpoint TV. The depth image or the encoding method of the depth image according to the embodiment of the invention can be used in various broadcasting technologies and thus industrial applicability is high.

**Claims**

1. A depth image generating method comprising:

a step (a) of obtaining a depth image at a viewpoint and setting the obtained depth image to a reference image;
a step (b) of applying a 3D warping method to the reference image and predicting and generating a depth image at a specific viewpoint; and
a step (c) of removing a hole that exists in the predicted and generated depth image.

2. The depth image generating method of claim 1,
wherein, in the step (a), the reference image is down-sampled.

3. The depth image generating method of claim 1,
wherein the step (b) includes:

a step (b1) of projecting positions of pixel values existing in the reference image onto a three-dimensional space;
a step (b2) of reprojecting the projected position values on the three-dimensional space at predetermined positions of a target image; and
a step (b3) of transmitting the pixel values of the reference image to pixel positions of the target image corresponding to pixel positions of the reference image.

4. The depth image generating method of claim 1,
wherein, in the step (c), when one reference image exists, an intermediate value of available pixel values among the pixel values around the hole is applied to the hole so as to remove the hole, and when a plurality of reference images exist, a pixel value of a corresponding portion of another reference image is applied to a hole of a depth image that is predicted and generated from a specific reference image so as to remove the hole.

5. The depth image generating method of claim 4, further comprising:

when the hole is not removed from the predicted and generated depth image,
a step (c1) of applying an intermediate value of available pixel values among pixel values around the hole to the hole; and
a step (c2) of extracting the pixel value applied to the hole and applying the pixel value to the predicted and generated depth image.

6. A depth image generating device comprising:

a depth image storage unit that obtains a depth image at a viewpoint and stores the obtained depth image as a reference image;
a depth image prediction unit that applies a 3D warping method to the reference image and predicts and generates a depth image at a specific viewpoint; and
a hole removing unit that removes a hole that exists in the depth image predicted and generated by the depth image prediction unit.

7. The depth image generating device of claim 6, further comprising:

a down-sampling unit that down-samples the reference image stored in the depth image storage unit.

8. The depth image generating device of claim 6,
wherein the depth image prediction unit projects positions of pixel values existing in the reference image onto a three-dimensional space, reprojects the projected position values on the three-dimensional space at predetermined positions of a target image, and transmits the pixel values of the reference image to pixel positions of the target image corresponding to pixel positions of the reference image, such that the depth image at the specific viewpoint is predicted and generated.

9. The depth image generating device of claim 6,
wherein, when one reference image exists, the hole removing unit applies an intermediate value of available pixel values among pixel values around the hole to the hole so as to remove the hole, and when a plurality of reference images exist, the hole removing unit applies a pixel value of a corresponding portion of another reference image to a hole of a depth image that is predicted and generated from a specific reference image so as to remove the hole.

10. The depth image generating device of claim 9,
wherein, when the hole is not removed from the predicted and generated depth image, the hole removing unit applies an intermediate value of available pixel values among pixel values around the hole to the hole, extracts the pixel value applied to the hole, and applies the pixel value to the predicted and generated depth image, such that the hole is removed.

11. An encoding method using a depth image at a specific viewpoint, the depth image being generated using the following steps:

a step (a) of obtaining a depth image at a viewpoint and setting the obtained depth image to a reference image;
a step (b) of applying a 3D warping method to the reference image and predicting and generating the depth image at a specific viewpoint; and
a step (c) of removing a hole that exists in the predicted and generated depth image.

12. The encoding method of claim 11,
wherein the step (b) includes:

a step (b1) of projecting positions of pixel values existing in the reference image onto a three-dimensional space;
a step (b2) of reprojecting the projected position values on the three-dimensional space at predetermined positions of a target image; and
a step (b3) of transmitting the pixel values of the reference image to pixel positions of the target image corresponding to pixel positions of the reference image.

13. The encoding method of claim 11,
wherein, in the step (c), when one reference image exists, an intermediate value of available pixel values among pixel values around the hole is applied to the hole so as to remove the hole, and when a plurality of reference images exist, a pixel value of a corresponding portion of another reference image is applied to a hole of a depth image that is predicted and generated from a specific reference image so as to remove the hole.

14. An encoder comprising:

an image prediction unit that performs inter-prediction and intra-prediction;
an image T/Q unit that transforms and quantizes a prediction sample that is obtained by the image prediction unit;
an entropy coding unit that encodes image data quantized by the image T/Q unit; and
a depth image generating unit that generates a depth image at a specific viewpoint by the image prediction unit,
wherein the depth image generating unit includes:
a depth image prediction unit that applies a 3D warping method to a reference image using a depth image at a viewpoint as the reference image and predicts and generates a depth image at a specific viewpoint; and
a hole removing unit that removes a hole that exists in the depth image predicted and generated by the depth image prediction unit.

15. The encoder of claim 14,
wherein the depth image prediction unit projects positions of pixel values existing in the reference image onto a three-dimensional space, reprojects the projected position values on the three-dimensional space at predetermined positions of a target image, and transmits the pixel values of the reference image to pixel positions of the target image corresponding to pixel positions of the reference image, such that the depth image at the specific viewpoint is predicted and generated.

16. The depth image generating device of claim 14,
wherein, when one reference image exists, the hole removing unit applies an intermediate value of available pixel values among pixel values around the hole to the hole so as to remove the hole, and when a plurality of reference images exist, the hole removing unit applies a pixel value of a corresponding portion of another reference image to a hole of a depth image that is predicted and generated from a specific reference image so as to remove the hole, such that the depth image is generated.

**17.** A decoding method that decodes the image encoded by the method of any one of claims 11 to 13.

**18.** A decoder that decodes the image encoded by the method of any one of claims 11 to 13.

[FIG. 1]

```
        ┌─────────────┐
        │    START    │
        └──────┬──────┘
               │
               ▼
┌──────────────────────────────────┐
│   PHOTOGRAPH REFERENCE IMAGE AT   │──── S100
│  ANY VIEWPOINT USING DEPTH CAMERA │
└──────────────┬───────────────────┘
               │
               ▼
┌──────────────────────────────────┐
│    DOWN-SAMPLE REFERENCE IMAGE    │──── S105
└──────────────┬───────────────────┘
               │
               ▼
┌──────────────────────────────────┐
│  PREDICT AND GENERATE DEPTH IMAGE IN │
│   SPECIFIC VIEWING DIRECTION FORM  │──── S110
│  REFERENCE IMAGE USING 3D WARPHING │
│              METHOD                │
└──────────────┬───────────────────┘
               │
               ▼
┌──────────────────────────────────┐
│  REMOVE HOLE THAT EXISTS IN PREDICTED │──── S115
│    AND GENERATED DEPTH IMAGE      │
└──────────────┬───────────────────┘
               │
               ▼
┌──────────────────────────────────┐
│   GENERATE DEPTH IMAGE IN SPECIFIC │──── S120
│        VIEWING DIRECTION          │
└──────────────┬───────────────────┘
               │
               ▼
        ┌─────────────┐
        │     END     │
        └─────────────┘
```

[FIG. 2]

[FIG. 3]

300

305

(a)

305

310

(b)

[FIG. 4]

| Left Up | Up | Right Up |
|---------|------|-----------|
| Left | Hole | Right |
| Left Down | Down | Right Down |

[FIG. 5]

[FIG. 6]

[FIG. 7]

ENTROPY CODING BLOCK (740)

ENTROPY CODING UNIT (744)

REARRANGING UNIT (742)

bit stream

IMAGE T/Q UNIT (730)

Q (734)

T (732)

$Q^{-1}$ (726)

$T^{-1}$ (724)

Dn

IMAGE PREDICTION BLOCK (710)

712a

712b

P

inter

intra

MOTION ESTIMATION UNIT (714)

MOTION COMPENSATION UNIT (716)

INTRA-PREDICTION EXECUTION UNIT (720)

INTRA-FRAME ESTIMATION SELECTION UNIT (718)

uF'n

FILTER (722)

Fn

$F_{n-1}$

Fr

BUFFER (750)

HOLE REMOVING UNIT (706)

DEPTH IMAGE PREDICTION UNIT (704)

DOWN-SAMPLING UNIT (702)

$F_{n-1}$

[FIG. 8]

EP 2 059 053 A2

700

| DOWN-SAMPLING UNIT (702) | DEPTH IMAGE PREDICTION UNIT (704) | HOLE REMOVING UNIT (706) | IMAGE PREDICTION UNIT (710) | IMAGE T/Q UNIT (730) | ENTROPY CODING UNIT (740) |

DOWN-SAMPLE REFERENCE IMAGE (S800)

PREDICT DEPTH IMAGE (S805)

REMOVE HOLE THAT EXISTS IN DEPTH IMAGE (S810)

SELECT SPECIFIC MODE AND PERFORM ENCODING (S815)

GENERATE ESTIMATION MACRO BLCOK (S820)

GENERATE DIFFERENCE VALUE MACRO BLOCK (S825)

IBT TRANSFORM AND QUANTIZATION ON MACRO BLCOK (S830)

ENCODE MACOR BLCOK AND OUTPUT ENCODED MACRO BLOCK AS BIT STREAM (S835)

[FIG. 9]

[FIG. 10]

900

| Block (Reference) | Step |
|---|---|
| ENTROPY DECODER (910) | CONFIGURE TRANSFORM COEFFICIENT (S1005) |
| REARRANGING UNIT (742) | CONFIGURE MACRO BLOCK (S1010) |
| $T^{-1}$ (726) and $Q^{-1}$ (724) | CONFIGURE TRANSFORM COEFFICIENT (S1015) |
| MOTION COMPENSATION UNIT (716) OR INTRA-PREDICTION EXECUTION UNIT (720) | GENERATE ESTIMATION MACRO BLOCK (S1020) |
| ADDER (712b) | GENERATE FRAME RECONFIGURED BY SUMMATION (S1025) |
| UP-SAMPLING UNIT (905) | GENERATE DEPTH IMAGE THROUGH UP-SAMPLING (S1030) |

INPUT BIT STREAM (S1000)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PHILLIP MERKLE ; ALJOSCHA SMOLIC ; KARSTEN MULLER ; THOMAS WIEGAND.** Efficient Compression of Multi-view Depth Data based on MVC. *IEEE 3DTV Conference,* May 2007